(19) Europäisches Patentamt
European Patent Office
Office européen des brevets

(11) **EP 3 408 566 B1**

(12) **EUROPÄISCHE PATENTSCHRIFT**

(45) Veröffentlichungstag und Bekanntmachung des Hinweises auf die Patenterteilung:
**10.07.2019   Patentblatt 2019/28**

(21) Anmeldenummer: **17719267.1**

(22) Anmeldetag: **26.04.2017**

(51) Int Cl.:
**F16J 9/20** (2006.01)

(86) Internationale Anmeldenummer:
**PCT/EP2017/059855**

(87) Internationale Veröffentlichungsnummer:
**WO 2017/207172 (07.12.2017 Gazette 2017/49)**

(54) **ZWEITEILIGER ÖLABSTREIFRING MIT ÖLDRUCKEFFEKTSTEGEN**

TWO PART OIL CONTROL RING HAVING OIL PRESSURE EFFECT RIDGES

SEGMENT RACLEUR D'HUILE EN DEUX PARTIES COMPRENANT DES ÉLÉMENTS DE LIAISON À EFFET SUR LA PRESSION D'HUILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.06.2016   DE 102016110131**

(43) Veröffentlichungstag der Anmeldung:
**05.12.2018   Patentblatt 2018/49**

(73) Patentinhaber: **Federal-Mogul Burscheid GmbH**
**51399 Burscheid (DE)**

(72) Erfinder:
• **MITTLER, Richard**
**51399 Burscheid (DE)**
• **RUCH, Fabian**
**51375 Leverkusen (DE)**

(74) Vertreter: **Becker Kurig Straus**
**Patentanwälte**
**Bavariastrasse 7**
**80336 München (DE)**

(56) Entgegenhaltungen:
DE-A1-102009 036 240    US-A- 1 467 408
US-A- 1 585 422         US-A- 2 048 258
US-A- 2 245 980

**Beschreibung**

**Gebiet der Erfindung**

Die Erfindung betrifft Kolbenringe, insbesondere einen Ölabstreifring.

**Stand der Technik**

In Viertaktmotoren besteht eines der Hauptprobleme in der Kontrolle und Abdichtung des Kolbenring-Kolben-Systems von und mit im Kurbelgehäuse vorhandenem Öl; hierzu werden Kolbenringe eingesetzt, die den Brennraum möglichst gut vom Kurbelgehäuseöl abdichten sollen. Dabei ist zu beachten, dass eine gewisse Ölmenge im System notwendig ist, um die Funktionsfähigkeit des Kolbenring-Systems in Bezug auf Reibung und auf Abdichtung von Gas aus dem Brennraum zu gewährleisten. Diese definierte Ölmenge soll einerseits möglichst klein gehalten werden, ohne andererseits den hydrodynamischen Schmierfilm auf den Kolbenringlaufflächen zu unterbinden. Insbesondere der Ölabstreifring muss die Kontrolle für ein perfektes Gleichgewicht zwischen Ölemissionen, Funktionsfähigkeit und Verschleißfestigkeit bewerkstelligen.

Ölabstreifringe, im Folgenden auch kürzer als Ölringe bezeichnet, werden als zwei- oder dreiteilige Ausführungen in LVD, LVP HD Motoren eingesetzt. Bei zweiteiligen Ringen ist ein Ringträger mit einer innenliegenden Feder ausgelegt, die die außenliegende Lauffläche gegen die Zylinderwand drückt. Auf der Lauffläche des Kolbenrings sind zwei Stege angeordnet, die überschüssiges Öl von der Zylinderwand abstreifen, wobei sich zwischen den Stegen Öffnungen, in Form von z.B. Bohrungen oder Schlitzen, befinden, welche überschüssiges Öl von der Außenseite zur Innenseite des Kolbenrings ableiten. Die Stege sind in ihrer Ausführung bezügliche Höhe und Tiefe symmetrisch angeordnet.

US 2245980 offenbart einen Ölabstreifring gemäß dem Oberbegriff des Anspruchs 1.

Der vorliegenden Erfindung liegt die Aufgabe zugrunde, die Kontrolle über die im Kolbenringsystem befindliche Ölmenge weiter zu verbessern und so den Ölverbrauch, bei gleichzeitigem Aufrechterhalten der Funktionsfähigkeit des Ringpaktes, zu reduzieren.

**Zusammenfassung der Erfindung**

Erfindungsgemäß wird die Aufgabe gelöst durch einen Ölabstreifring umfassend einen Ringträger und eine innenliegende Feder; wobei an der außenliegenden Lauffläche des Ringträgers in Umlaufrichtung umlaufend zwei Stege mit einer dazwischenliegenden Nut angeordnet sind; wobei Öffnungen angeordnet sind, die radial von der Nut zur Innenseite des Ringträgers verlaufen. Dabei sind die Laufflächenbereiche der Stege konvex ballig mit jeweils einem Pivotpunkt ausgebildet sind, wobei der Abstand der beiden Pivotpunkte zur Ringachse gleich ist, und die axiale Höhe des brennraumseitigen Stegs mindestens um den Faktor 2 größer als die axiale Höhe des kurbelraumseitigen Stegs ist.

Gemäß einem Aspekt der vorliegenden Erfindung kann der Laufflächenbereich des brennraumseitigen Stegs asymmetrisch ballig ausgebildet sein.

Gemäß einem anderen Aspekt kann der Pivotpunkt des Laufflächenbereichs des brennraumseitigen Stegs in der Nähe der Nut angeordnet sein, in einem Abstand kleiner als 25%, bevorzugt kleiner als 15%, der axialen Höhe des brennraumseitigen Stegs.

Gemäß einem weiteren Aspekt kann der Laufflächenbereich des kurbelraumseitigen Stegs symmetrisch ballig ausgebildet sein, und der Pivotpunkt mittig bezüglich der axialen Höhe des kurbelraumseitigen Stegs angeordnet sein.

Hier wird der üblichen Bezeichnungsweise gefolgt, dass sich axial auf die entsprechende Richtung des Kolbens bezieht, also die Richtung der Hin- und Herbewegung desselben, bzw. auf die entsprechende Achse des Kolben-Zylinders. Die Ringachse ist die durch den Mittelpunkt des Ringes in axiale Richtung verlaufende Achse, die im eingebauten Zustand mit der Mittelachse des Kolbens zusammenfällt. Eine radiale Richtung ist entsprechend eine Richtung die, parallel zur Ringebene, auf die Ringachse zu oder von dieser weg verläuft.

**Kurze Beschreibung der Zeichnung**

Im Folgenden werden beispielhafte Ausführungsformen der Erfindung unter Bezug auf die Figur genauer beschrieben, wobei

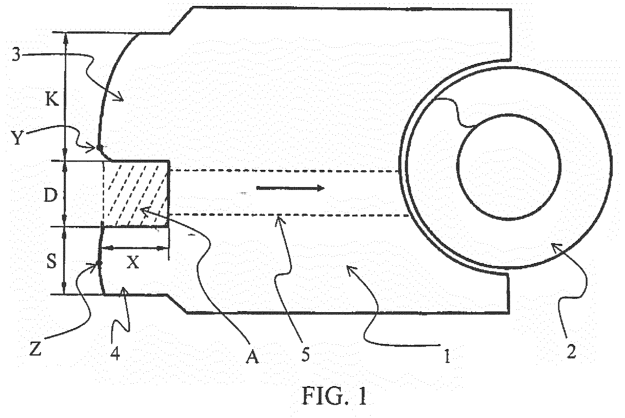

Figur 1 eine axiale Querschnittsansicht des Ölabstreifrings zeigt.

**Ausführliche Beschreibung der Erfindung**

In Fig. 1 ist eine beispielhafte Ausführungsform eines Ölabstreifrings gemäß der vorliegenden Erfindung in einer axialen Querschnittsansicht dargestellt. Der Ölabstreifring ist zweiteilig aufgebaut mit einem Ringträger 1 und einer ringförmigen innenliegenden Feder 2, z. B. einer Schlauchfeder, welche den Ölabstreifring im eingebauten Zustand nach außen gegen die Zylinderwand drückt. An dem Laufflächenbereich des Ölrings sind in Umlaufrichtung umlaufend zwei Stege 3, 4 angeordnet, zwischen denen sich eine Vertiefung in Form einer Nut befindet, welche ebenfalls in Umlaufrichtung umlaufend angeordnet ist und die in der axialen Querschnittsansicht eine Fläche F aufweist. Vom Boden der Nut erstrecken sich, in Umlaufrichtung mehrere, Öffnungen 5, z.B. in Form von Bohrungen oder Schlitzen, zur Innenseite des Ringträgers 1, dadurch kann überschüssiges Öl vom Laufflächenbereich zur Innenseite des Ölrings in die Ringnut des Kolbens abfließen, von wo es dann durch geeignete Abflüsse im Kolben weitergeleitet wird. Der gezeigte Ölring zeichnet sich durch eine asymmetrische Laufflächenanordnung aus; die beiden Stege 3, 4 unterscheiden sich sowohl stark in ihrer axialen Höhe K, S, als auch in ihrer Laufflächenkontur. Symmetrisch bzw. asymmetrisch sind hier bezüglich der axialen Richtung zu verstehen, d.h. im Sinne einer Spiegelsymmetrie bezüglich einer Ebene, die parallel zu Ringebene verläuft, also senkrecht auf der axialen Richtung steht. In der Schnittdarstellung der Fig. 1 wäre dies bezüglich einer waagrechten Linie. In Umlaufrichtung ist der Ring rotationssymmetrisch, abgesehen vom Ringstoß.

Der brennraumseitige Steg 3, weist eine stark asymmetrische konvexe Balligkeit auf, d.h. die Lauffläche ist nach außen gekrümmt, wobei die Krümmung in der Nähe der Nut grösser ist als die Krümmung in der Nähe der Seite des Stegs, welche dem Brennraum zugewandt ist, in der Figur oben. In der Nähe der Nut beschreibt die Lauffläche, in axialer Richtung, also einen relativ scharfen Bogen, während sie auf der anderen Seite in einer relativ flachen Krümmung ausläuft. Der Pivotpunkt Y, oder auch 'Scheitelpunkt', d.h. der Punkt, der in radialer Richtung am weitesten außen liegt und an dem der Ring also an der Zylinderwand anliegen wird, befindet sich in der Nähe der Nut. Bevorzugt beträgt der Abstand in axialer Richtung des Pivotpunkts Y von der Nut weniger als 25% der axialen Höhe K des brennraumseitigen Stegs 3, weiter bevorzugt weniger als 15%, der Pivotpunkt Y ist also stark nach unten in Richtung Kurbelraum ausgerichtet. Die Wahl der Kontur hat zur Folge, dass zu viel eingebrachtes Öl bei einem Aufwärtshub des Kolbens einfach überlaufen wird, da durch die asymmetrische Form der Lauffläche des brennraumseitigen Stegs 3 Öl in einen relativ großen Bereich, in axialer Richtung, zwischen Zylinderwand und Lauffläche des Stegs eindringen kann, und somit eine relativ große Kraft bedingt, die der Anpresskraft des Stegs 3 an die Zylinderwand entgegen wirkt. Umgekehrt führt die Anordnung des Pivotpunkts Y bei einem Abwärtshub zu einer entsprechend guten Öl-Abstreifwirkung des brennraumseitigen Stegs. Das Öl wird beim Abwärtshub zwischen den Stegen 3, 4 gehalten, bis ein entsprechendes Druckgefälle zum Fluss des Öls durch die Öffnungen 5 zu der innenliegenden Seite des Ringträgers 1 führt.

Der kurbelraumseitige Steg 4 ist an der Lauffläche mit einer relativ starken konvexen Balligkeit ausgeführt, d.h. die Lauffläche weist in axialer Richtung eine relativ starke Krümmung auf. 'Relativ stark' ist hier in Bezug auf die flach gekrümmte Seite der Lauffläche des brennraumseitigen Stegs 3 zu verstehen. Der Pivotpunkt Z des kurbelraumseitigen Stegs 4 befindet sich in axialer Richtung in etwa auf halber Höhe der Höhe S des kurbelraumseitigen Stegs 4. In radialer Richtung entspricht die Anordnung des Pivotpunkts Z des kurbelraumseitigen Stegs 4 der des Pivotpunkts Y des brennraumseitigen Stegs 3, sie sind in axialer Richtung miteinander ausgerichtet, befinden sich also im gleichen Abstand von der Achse des Rings und liegen in eingebautem Zustand gleichzeitig an der Zylinderwand an. Durch diese Gestaltung der Lauffläche wird eine gute Abstreifwirkung des kurbelraumseitigen Stegs 3 in beide Richtungen erreicht: bei einem Abwärtshub wird Öl nach unten in den Kurbelraum abgestreift, bei einem Aufwärtshub wird Öl in dem Bereich zwischen den Stegen gehalten.

Die Gestaltung der Laufflächen der Stege 3, 4 wird ermöglicht, und in ihrer Wirkung unterstützt, durch den Höhenunterschied der beiden Stege in axialer Richtung. Der brennraumseitige Steg 3 weist eine mindestens zweimal so große axiale Höhe K (Kontrollhöhe) auf wie der kurbelraumseitige Steg 4, der eine axiale Höhe S (Abstreifhöhe) aufweist. Es gilt also K > 2·S.

Um die Funktion zu gewährleisten ist der Ölabstreifring so aufgebaut, insbesondere die Feder 2 so angeordnet, dass sich der Flächenschwerpunkt des Ringträgers 1, d.h. das Zentrum der nach außen gerichteten, von der Feder ausgehenden, Kraft, in axialer Höhe zwischen den beiden Pivotpunkten Y, Z befindet. Beide Laufflächen der Stege 3, 4 werden dann gleichzeitig an den jeweiligen Pivotpunkten Y, Z an die Zylinderwand gedrückt. Bevorzugt ist hier, dass die Kraft jeweils in etwa zur Hälfte über jeden der beiden Stege übertragen wird. Denkbar ist aber auch eine ungleichmäßige Aufteilung der Kraft, um im Betrieb auftretenden dynamischen Kräften entgegen zu wirken und in allen Betriebszuständen für eine passende Anpresskraft an die Zylinderwand zu sorgen, um etwa ein Abheben eines der Stege von der Zylinderwand während des Betriebs zu verhindern.

Die Nut, die sich zwischen den beiden Stegen 3, 4 befindet, ist charakterisiert durch eine axiale Höhe D, entsprechend dem Abstand der beiden Stege, und eine Tiefe X. Die Menge an Öl, die zwischen den Stegen 3, 4 gehalten werden kann, wird bestimmt durch die ausgesparte Fläche A = D·X der Nut, das Volumen ergibt sich dann durch Multiplikation mit einem durchschnittlichen Umfang der Nut.

Dieses Volumen der Nut zwischen den Stegen 3, 4 ist entscheidend, um zu erreichen, dass einerseits genug Öl ins Kolbenring-System kommt, um die Funktion der Kolbenringe zu gewährleisten, und andererseits nicht zu viel Öl ins System kommt, um möglichst kleine Emissionswerte zu erhalten. Es hat sich herausgestellt, dass hierzu die Fläche A proportional zum Produkt von Flächenpressung $P_0$ und Summe der Ringsteghöhen K+S sein sollte bezogen auf einen notwendigen Durchflussfaktor $D_x$, wobei die Flächenpressung $P_0$ der Druck ist mit dem die Stege auf die Zylinderwand drücken, d.h. die Kraft bezogen auf die Gesamtfläche der Laufflächen der Stege:

$$A = P_0 \cdot \frac{K+S}{D_x}$$

Der numerische Wert des Durchflussfaktors $D_x$ beträgt in etwa 2 bis 9 N/mm³. $D_x$ ergibt sich aus dem abgeleiteten Volumenstrom und der Dichte des Mediums bezogen auf die gesamte Lauffläche des Ringes: $D_x$ =

$\rho/2 \cdot V^2 \cdot l/Lh$; wobei $\rho$ die Dichte des Mediums, V die Geschwindigkeit des Volumenstroms und Lh die Linerhöhe, d.h. Lauflänge des Ringes entlang der Zylinderwand, ist.

Eine solche Ausgestaltung führt zu einer Reduzierung des Ölverbrauchs bei gleichzeitiger voller Funktionsfähigkeit des Ringpakets. Auch wird eine Reduzierung der Scherkräfte zwischen den Stegen bei reduzierter Ölmenge erreicht.

## Patentansprüche

1.  Ölabstreifring umfassend einen Ringträger (1) und eine innenliegende Feder (2);
    wobei an der außenliegenden Lauffläche des Ringträgers in Umlaufrichtung umlaufend zwei Stege (3, 4) mit einer dazwischenliegenden Nut angeordnet sind;
    wobei Öffnungen (5) angeordnet sind, die radial von der Nut zur Innenseite des Ringträgers (1) verlaufen; **dadurch gekennzeichnet, dass** die Laufflächenbereiche der Stege (3, 4) konvex ballig mit jeweils einem Pivotpunkt (Y, Z) ausgebildet sind, wobei der Abstand der beiden Pivotpunkte (Y, Z) zur Ringachse im Wesentlichen gleich ist;
    wobei die axiale Höhe (K) des brennraumseitigen Stegs (3) mindestens um den Faktor 2 größer ist als die axiale Höhe (S) des kurbelraumseitigen Stegs (4).

2.  Ölabstreifring gemäß Anspruch 1, wobei der Laufflächenbereich des brennraumseitigen Stegs (3) asymmetrisch ballig ausgebildet ist.

3.  Ölabstreifring gemäß einem der vorstehenden Ansprüche, wobei der Pivotpunkt (Y) des Laufflächenbereichs des brennraumseitigen Stegs (3) in der Nähe der Nut angeordnet ist, in einem Abstand kleiner als 25%, bevorzugt kleiner als 15%, der axialen Höhe (K) des brennraumseitigen Stegs (3).

4.  Ölabstreifring gemäß einem der vorstehenden Ansprüche, wobei der Lauflächenbereich des kurbelraumseitigen Stegs (4) symmetrisch ballig ausgebildet ist, und wobei der Pivotpunkt (Z) mittig bezüglich der axialen Höhe (S) des kurbelraumseitigen Stegs (4) angeordnet ist.

## Claims

1.  An oil wiper ring comprising a ring carrier (1) and an internal spring (2);
    wherein two lands (3, 4) with a groove located therebetween are arranged on the external running surface of the ring carrier in the direction of rotation;
    wherein openings (5) are arranged, which run radially from the groove to the inside of the ring carrier (1);
    **characterized in that** the running surface regions of the lands (3, 4) are formed in a convexly crowned manner each having a pivot point (Y, Z), wherein the distance between the two pivot points (Y, Z) and the ring axis is substantially equal;
    wherein the axial height (K) of the land (3) on the combustion chamber side is greater by at least a factor of 2 than the axial height (S) of the land (4) on the crankcase side.

2.  The oil wiper ring according to claim 1, wherein the running surface region of the land (3) on the combustion chamber side is formed in an asymmetrically crowned manner.

3.  The oil wiper ring according to one of the preceding claims, wherein the pivot point (Y) of the running surface region of the land (3) on the combustion chamber side is arranged proximate to the groove at a distance of less than 25 %, preferably less than 15 %, of the axial height (K) of the land (3) on the combustion chamber side.

4.  The oil wiper ring according to one of the preceding claims, wherein the running surface region of the land (4) on the crankcase side is formed in a symmetrically crowned manner, and wherein the pivot point (Z) is arranged centrally in relation to the axial height (S) of the land (4) on the crankcase side.

## Revendications

1.  Segment racleur d'huile, comprenant un porte-segment (1) et un ressort interne (2) ;
    dans lequel, sur la surface de roulement externe du porte-segment, deux entretoises (3, 4) avec une rainure intercalée sont disposées en s'étendant dans le sens périphérique ;
    dans lequel des ouvertures (5) sont disposées qui s'étendent radialement de la rainure à la face intérieure du porte-segment (1) ;
    **caractérisé en ce que** les zones de surface de roulement des entretoises (3, 4) sont réalisées de manière convexe bombée avec respectivement un point de pivotement (Y, Z), la distance des deux points de pivotement (Y, Z) par rapport à l'axe de segment étant substantiellement identique ;
    dans lequel la hauteur axiale (K) de l'entretoise (3) côté chambre de combustion est supérieure au moins d'un facteur 2 à la hauteur axiale (S) de l'entretoise (4) côté carter de vilebrequin.

2.  Segment racleur d'huile selon la revendication 1, dans lequel la zone de surface de roulement de l'entretoise (3) côté chambre de combustion est réalisée de manière asymétrique bombée.

**3.** Segment racleur d'huile selon l'une quelconque des revendications précédentes, dans lequel le point de pivotement (Y) de la zone de surface de roulement de l'entretoise (3) côté chambre de combustion est disposé à proximité de la rainure, à une distance inférieure à 25 %, de préférence inférieure à 15 %, de la hauteur axiale (K) de l'entretoise (3) côté chambre de combustion.

**4.** Segment racleur d'huile selon l'une quelconque des revendications précédentes, dans lequel la zone de surface de roulement de l'entretoise (4) côté carter de vilebrequin est réalisée de manière symétrique bombée, et dans lequel le point de pivotement (Z) est disposé au centre par rapport à la hauteur axiale (S) de l'entretoise (4) côté carter de vilebrequin.

FIG. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2245980 A